**Europäisches Patentamt**

**European Patent Office**

**Office européen des brevets**

(19)

(11) Veröffentlichungsnummer : **0 066 682**
**B1**

(12)

# EUROPÄISCHE PATENTSCHRIFT

(45) Veröffentlichungstag der Patentschrift :
**16.06.87**

(51) Int. Cl.⁴ : **G 05 B 19/23**

(21) Anmeldenummer : **82102663.0**

(22) Anmeldetag : **30.03.82**

(54) **Positioniereinrichtung.**

(30) Priorität : **06.06.81 DE 3122621**

(43) Veröffentlichungstag der Anmeldung :
**15.12.82 Patentblatt 82/50**

(45) Bekanntmachung des Hinweises auf die Patenterteilung : **16.06.87 Patentblatt 87/25**

(84) Benannte Vertragsstaaten :
**AT CH FR GB IT LI NL SE**

(56) Entgegenhaltungen :
**DE-A- 2 337 199**
**DE-B- 2 207 224**
**GB-A- 2 065 328**
**US-A- 3 828 742**

(73) Patentinhaber : **Dr. Johannes Heidenhain GmbH**
**Nansenstrasse 17**
**D-8225 Traunreut (DE)**

(72) Erfinder : **Schmitt, Walter, Ing. grad.**
**Hochgernstrasse 22**
**D-8225 Traunreut (DE)**

## Beschreibung

Die Erfindung bezieht sich auf eine Einrichtung nach dem Oberbegriff des Anspruches 1.

Derartige Einrichtungen sind bekannt. In der US-A-3 996 454 ist eine Geschwindigkeitsüberwachungseinrichtung beschrieben, die zwar eine untere und eine obere Grenzgeschwindigkeit überwachen kann, die jedoch nicht so ausgelegt ist, daß Fehlfunktionen der Bauelemente erkannt werden können.

Eine ähnliche Schaltung zur Überwachung einer oberen Grenzgeschwindigkeit ist in der US-A-3 778 696 beschrieben. Auch dieses Schaltung kann eigene Fehlfunktionen nicht erkennen.

Die GB-A-2 065 328 zeigt eine Einrichtung zum Positionieren von relativ zueinander verschiebbaren Maschinenbauteilen mit einer Antriebseinrichtung für ein bewegliches Maschinenbauteil. Bei dieser Einrichtung wirkt die Steuerungseinrichtung mit einer Überwachungsschaltung zusammen, in der die Ist-Geschwindigkeit der relativ zueinander beweglichen Maschinenbauteile mit den entsprechenden, von der Steuereinrichtung vorgegebenen Sollwerten verglichen werden.

Am Ausgang dieser Überwachungsschaltung steht eine aus den vorgenannten Ist- und Sollwerten abgeleitete Kombination von Binärsignalen an, so daß eine Fehlermeldung ausgebbar ist, wenn die vorgebbare Kombination von Binärsignalen unzulässig ist, das heißt, wenn die Ist-Geschwindigkeit des beweglichen Teils die zulässige Geschwindigkeit überschreitet.

Ferner ist aus der DE-A-2 337 199 eine Schaltungsanordnung zum Messen, Überwachen und Regeln von Drehzahlen bekannt. Diese Anordnung zeigt eine Schaltung mit einem Kondensator, an dem eine sägezahnförmige Spannung anliegt, wobei diese Spannung triggerbar ist und das durch diese Triggerung gewonnene Binärsignal im Hinblick auf Betriebsstörungen überwachbar ist.

In der deutschen Zeitschrift « ELEKTRONIK » 1980, Heft 18, Seiten 47 bis 54 ist ein Positioniersystem beschrieben, bei dem elektronisch vorgebbare variable Größen mittels elektromechanischer Bauteile in räumliche Positionen umgewandelt werden können.

Bei dieser Positioniereinrichtung ist ein Geschwindigkeitsregelkreis vorgesehen, mit dessen Hilfe der Antriebsmotor so geregelt werden kann, daß nach dem Anfahren der Sollwert der Geschwindigkeit erreicht wird, und daß die Geschwindigkeit vor Erreichen der Endposition wieder reduziert wird, damit die Endposition nicht überfahren wird.

Da hierbei die Regelung direkt von den Istwerten abhängig ist, die ein mit dem Motor gekoppelter Tachogenerator liefert, können Fehler auftreten, wenn die Istwerte der Geschwindigkeit in irgend einer Weise fehlerhaft sind. Bei derartigen Positioniereinrichtungen kann eine unzulässige Gefährdung der Bedienungsperson auftreten und die Maschinenanlage sowie das Werkstück, das beispielsweise gerade bearbeitet wird, schwer beschädigt werden, wenn die Positionierung falsch geregelt wird.

Der Erfindung liegt die Aufgabe zugrunde eine Einrichtung der eingangs genannten Art dahingehend weiterzubilden, daß möglichst viele Baugruppen einer Positioniereinrichtung überwacht werden und dadurch die Positioniereinrichtung noch sicherer betrieben werden kann.

Diese Aufgabe wird durch die im Kennzeichen des Anspruches 1 angegebenen Maßnahmen gelöst.

Der Unteranspruch gibt die Ausgestaltung der Erfindung an.

Die Vorteile der Erfindung liegen in der hohen Betriebssicherheit der gesamten Positioniereinrichtuneg, da sowohl die eigentliche Meßeinriechtung (der die Positions-Istwerte erzeugende Signaeelgeber), als auch die Meßsignalaufbereitungsbaueinheit, der Richtungsdiskriminateor, die Servoeinrichtung, die Digital-Analog-Umsetzer und die Bauelemente der Überwachungsschaltung hinsichtlich ihrer ordnungsgemäßen Funktion überwacht werden.

Die Erfindung wird anhand des in den Zeichnungen dargestellten Ausführungsbeispieles näher erläutert.

Es zeigen

Figur 1 eine Prinzipskizze einer Positioniereinrichtung,

Figur 2 ein Blockschaltbild des elektrischen Teiles der Positioniereinrichtung gemäß Figur 1,

Figur 3 ein Prinzipschaltbild einer Überwachungsschaltung,

Figur 4 Signalverläufe verschiedener Signale innerhalb der Positioniereinrichtung bei fehlerfreier bzw. fehlerhafter Funktion.

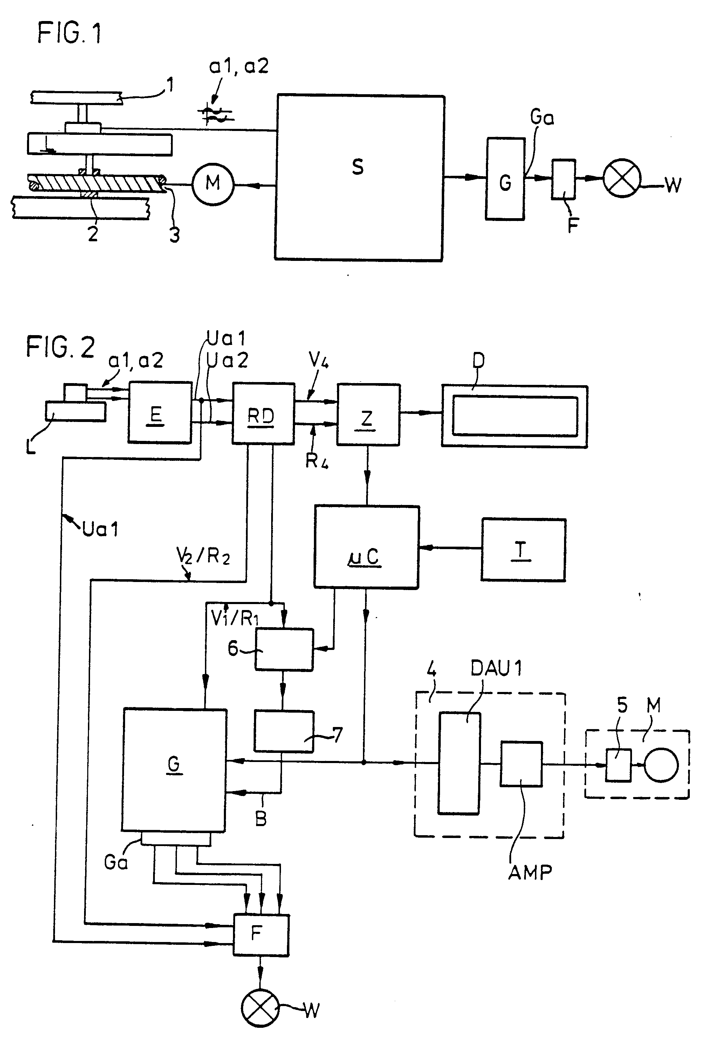

Ein als Längenmeßeinrichtung L ausgebildeter Signalgeber ist gemäß Figur 1 in üblicher Weise am Bett 1 bzw. am Schlitten 2 einer Werkzeugmaschine angebracht. Die Längenmeßeinrichtung L arbeitet inkremental und ist von der Bauart, wie beispielsweise in der DE-C-2 505 585 beschrieben. Eine Steureinrichtung S steuert in Abhängigkeit von Programmdaten eine Antriebseinrichtung M an, die über eine Spindel 3 den Schlitten 2 relativ zum Bett 1 verschiebt. Diese Bewegung wird von der Längenmeßeinrichtung L registriert, die nun Meßsignale als Positions-Istwerte $a_1$, $a_2$ in die Steuereinrichtung S einspeist, wo sie zusammen mit Programmdaten verarbeitet werden. In eine Geschwindigkeitsüberwachungsschaltung G werden sowohl das zum Geschwindigkeits-Istwert $V_1$ aufbereitete Meßsignal $a_1$ als auch die von den Programmdaten abgeleiteten Werte für die Bewegung der Maschinenbauteile 1 und 2 eingegeben. Am Ausgang Ga der Geschwindigkeitsüberwachungsschaltung G ist über ein fehlersicheres Netzwerk F eine Warnlampe W angeschlossen, die Alarm signalisiert, wenn die tatsächliche Bewegungsgeschwindigkeit (der Istwert) der relativ zueinander beweglichen Maschinen-Bauteile 1 und 2 von dem Sollwert der Geschwindigkeit abweicht. Selbsverständlich kann neben oder anstelle der Warnlampe W das Fehlersignal auch eine akustische Warnung hervorrufen oder die Maschine selbsttätig stoppen.

Das Blockschaltbild in Figur 2 enthält die wesentlichen elektrischen Elemente der Überwachungseinrichtung. Die von der inkrementalen Längenmeßeinrichtung L erzeugten Meßsignale a1, a2 werden in einer Meßsignalaufbereitungsbaueinheit E verstärkt, getriggert und gegebenenfalls zur Zwischenwertbildung interpoliert. Die so aufbereiteten binären Meßsignale Ua1, Ua1 werden zur Erkennung der Bewegungsrichtung einem Richtungsdiskriminator RD zugeführt, von dem aus die Meßsignale als Vorwärts-/Rückwärtssignale V4/R4 in einen Vorwärts-/Rückwärtszähler Z eingespeist und deren Summe als Digitalwert in einer am Zähler Z angeschlossenen Anzeigeeinrichtung D numerisch angezeigt werden. Im Richtungsdiskriminator RD werden aus den binären Meßsignalen Ua1, Ua2 noch weitere Signale V1/R1, V2/R2 abgeleitet, wobei das Signal V1/R1 einen Impuls, das Signal V2/R2 zwei Impulse und das Signal V4/R4 vier Impulse pro Meßsignalperiode aufweist.

Die im Zähler Z zu einem Digitalwert aufsummierten Vorwärts-/Rückwärtssignale V4/R4 werden einem Digitalrechner μC zugeführt, dem damit der Istwert für die Position der Maschinen-Bauteile 1 und 2 zueinander vorliegt. Mittels einer Eingabeeinheit T (Tastatur, Magnetband, Lochstreifen u. dgl.) kann der Sollwert für die Position der Maschinen-Bauteile 1 und 2 als Digitalwert in den Digitalrechner μC eingegeben werden. Aus den Positions-Istwerten a1, a2 und den Positions-Sollwerten errechnet der Digitalrechner μC, ob eine Lageveränderung der Maschinenbauteile 1 und 2 erfolgen muß, und gibt im Falle einer notwendigen Lageänderung an seinem Ausgang einen Digitalwert ab, der einen Bewegungssollwert darstellt, also proportional einer Verschiebegeschwindigkeit ist.

Vom Ausgang des Digitalrechners μC wird dieser Digitalwert an eine Baueinheit 4 gelegt, die einen Digital-Analog-Umsetzer DAU 1 und einen Verstärker AMP enthält. Über diese Baueinheit wird die Antriebseinrichtung M mit einer dem Sollwert der Verschiebegeschwindigkeit entsprechenden Spannung beaufschlagt. Die Antriebseinrichtung M kann außer dem Motor noch weitere Bauelemente 5 (Servoeinrichtung, Tachogenerator u. dgl.) enthalten.

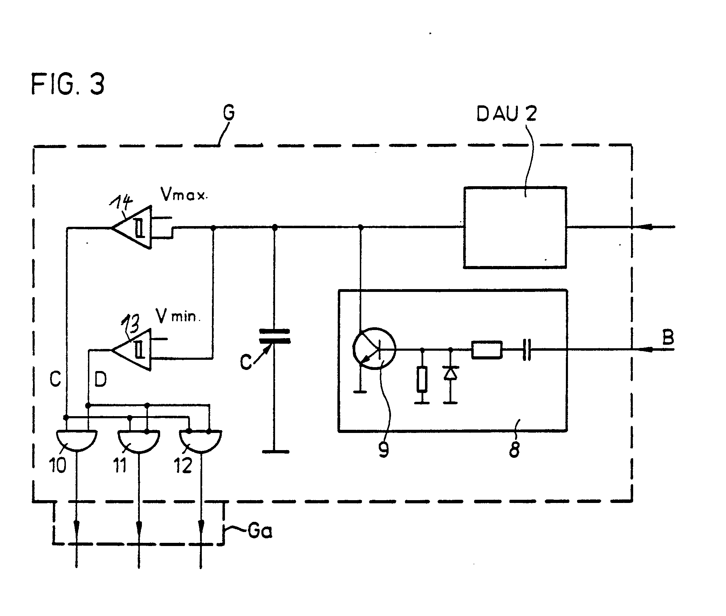

Parallel zu der vorstehenden Verzweigung des Digitalwertes für den Bewegungssollwert, wird dieser Digitalwert in die Überwachungsschaltung G eingespeist, wo er gemäß Figur 3 von einem Digital-Analog-Umsetzer DAU 2 in einen dem Sollwert der Verschiebegeschwindigkeit proportionalen Strom umgewandelt wird. Dieser Strom lädt einen Kondensator C auf, dessen Spannung Uc proportional zur Ladezeit ansteigt.

Von den richtungsabhängigen binären Meßsignalen V4/R4, die vom Richtungsdiskriminator RD aus den Zähler Z speisen, werden abgeleitete Vorwärts-/Rückwärtssignale V1 und R1 einem Richtungsvergleicherbaustein 6 zugeführt. An einem weiteren Eingang des Richtungsvergleicherbausteines 6 liegt eine aus dem Digitalrechner μC kommende, zählrichtungsabhängige Vorzeicheninformation an, die mit den Vorwärts-/Rückwärtssignalen V1 und R1 in bekannter Weise so verknüpft werden, daß am Ausgang des Richtungsvergleicherbausteines 6 nur dann ein binäres Signal V1/R1 anliegt, wenn die vom Digitalrechner μC ausgegebene Vorzeicheninformation (positiv bzw. negativ) mit dem Vorwärts- bzw. Rückwärtssignal V1 bzw. R1 übereinstimmt, d. h. wenn Richtungskoinzidenz vorliegt. In einem Teilerbaustein 7 wird das binäre Ausgangssignal vom Richtungsvergleicherbaustein 6 auf die halbe Taktfrequenz heruntergeteilt und anschließend als Signal B in die Überwachungsschaltung G eingespeist.

Wie aus Figur 3 ersichtlich, wird in der Überwachungsschaltung G dieses aus den umgeformten Meßsignalen Ua1, Ua2 abgeleitete Signal B halber Taktfrequenz einer Entladeschaltung 8 zugeführt, deren Schaltstufe 9 den Kondensator C periodisch entlädt, wobei die Entladeperiode von der Taktfrequenz des letztgenannten Signales B bestimmt wird.

Am Kondensator C liegt demnach während des Positionierens eine sogenannte Sägezahnspannung Uc an, deren Verlauf durch den Sollwert für die Bewegungsgeschwindigkeit der Maschinen-Bauteile 1 und 2 und mittelbar durch die vom Signalgeber L erzeugten Meßsignale a1, a2 bestimmt wird.

Durch die Sägezahnspannung Uc werden an den Ausgängen von zwei Triggern 13, 14 mit unterschiedlichen Triggerschwellen Vmax, Vmin zwei binäre Signalfolgen C für Vmax und D für Vmin erzeugt. Die binären Signale C und D sind über logische Elemente 10, 11 und 12 verknüpft, so daß am Ausgang Ga der Überwachungsschaltung G eine Kombination von Binärsignalen ansteht, aus der eine Fehlermeldung abzuleiten ist, die ein optisches oder akustisches Alarmsignal hervorruft, bzw. die Bewegung der Maschinen-Bauteile 1 und 2 stoppt.

Die Kombination von Binärsignalen kann auch an ein fehlersicheres Netzwerk F angeschlossen werden, so daß weitgehend alle Elemente der Positioniereinrichtung fehlersicher überwacht werden können. Ein solches fehlersicheres Netzwerk ist z. B. in der DE-C-2 207 224 beschrieben. Von einem Fachmann könnte ein derartiges Netzwerk an die Erfordernisse bei der vorstehenden Positioniereinrichtung angepaßt werden.

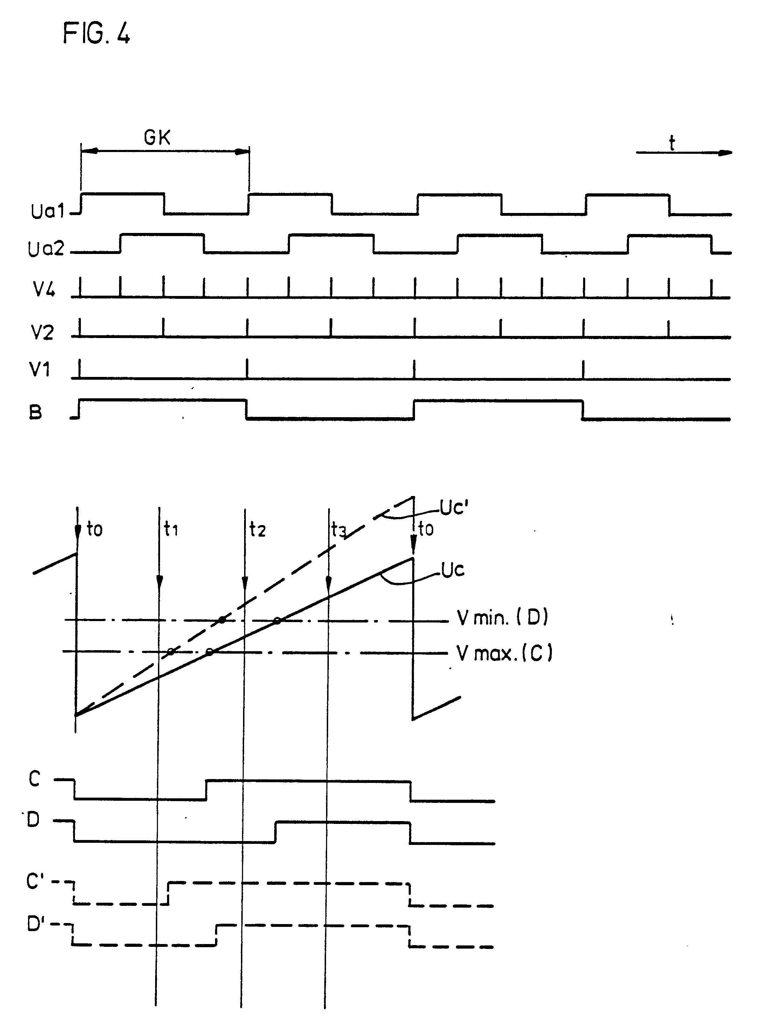

In Figur 4 sind verschiedene Signalverläufe dargestellt, anhand derer die vorbeschriebenen Vorgänge nochmals erläutert werden sollen.

Ein Binärsignal Ua1 wechselt seine Zustände periodisch mit einer Periode GK. Dieses Binärsignal Ua1 ist von dem analogen Meßsignal abgeleitet, das den Positions-Istwert a1 darstellt, (Figur 1). Die Periodizität entsteht durch die Abtastung eines Gittermaßstabes, der Bestandteil der inkrementalen Längenmeßeinrichtung L ist, und dessen Teilung aus einer Anzahl paralleler Striche besteht, deren

3

Gitterkonstante gleich GK ist. In einer Meßsignalaufbereitungsbaueinheit E wird das analoge Meßsignal a1 verstärkt, getriggert und gegebenenfalls durch Interpolation vervielfacht. Am Ausgang der Meßsignalaufbereitungsbaueinheit E liegt dann das binäre Signal Ua1 an. Von der Längenmeßeinrichtung L wird noch ein weiteres analoges Meßsignal a2 erzeugt, das gegenüber dem Meßsignal a1 um 90° verschoben ist. Dieses Signal ist zur Erkennung der Bewegungsrichtung der zu messenden Bauteile erforderlich und wird auf die gleiche Weise aufbereitet wie das analoge Meßsignal a1. Am Ausgang der Meßsignalaufbereitungsbaueinheit E stehen somit zwei binäre Signale Ua1 und Ua2 an.

In bekannter Weise werden diese Binärsignale Ua1 und Ua2 in einen Richtungsdiskriminator RD eingespeist, in dem die Bewegungsrichtung der zu messenden Maschinen-Bauteile 1 und 2 ermittelt wird, sowie die Signale V1/R1, V2/R2 und V4/R4 erzeugt werden. Die Signale V1, V2 und V4 sind als Vorwärtsbewegungs-Signale, die Signale R1, R2 und R4 als Rückwärtsbewegungs-Signale definiert. Da zur Erläuterung der Erfindung jedoch die Betrachtung einer Bewegungsrichtung ausreicht, sind in Figur 4 lediglich die Vorwärtsimpulse darstellenden Signale V1, V2 und V4 gezeigt. Aus dem Signal V1 wird in der Teilerschaltung 7 (Figur 2) ein Binärsignal B mit der halben Frequenz vom Signal V1 erzeugt. Der flankensynchrone Verlauf der beschriebenen Signale ist aus der zeichnerischen Darstellung der Signalverläufe in Figur 4 zu erkennen.

Unterhalb dieses Blockes von Signalverläufen ist der sägezahnförmige Spannungsverlauf Uc am Kondensator C dargestellt, wie anhand von Figur 3 erläutert. Der dem von der Steuereinrichtung S vorgegebene Sollwert der Verschiebegeschwindigkeit proportionale Strom beginnt nach dem Zeitpunkt to den Kondensator C aufzuladen, dessen Spannung im Laufe der Zeit t ansteigt, was durch die durchgehend gezeichnete ansteigende Linie deutlich wird. Zum Zeitpunkt to erfolgt dann jeweils die Entladung durch das Signal B. Die strichpunktiert gezeichneten waagerechten Linien geben die Lage der Triggerschwellen Wmax und Vmin an. Die Schnittpunkte des sägezahnförmigen Spannungsverlaufes Uc mit den Triggerschwellen Vmin und Vmax geben die Triggerpunkte an und es werden die binären Signale C und D erzeugt, wobei die Triggerstufe 14 das Signal C erzeugt und die Triggerstufe 13 das Signal D.

Die Zustandskombination der Binärsignale C und D wird nun daraufhin überprüft, ob ein fehlerfreier Betrieb vorliegt, oder ob eine Störung vorliegt. Zu bestimmten Prüfzeiten t1, t2, t3, die von den Impulsen der Signale V1 bzw. V2 exakt festgelegt sind, und die damit von der Frequenz der aufbereiteten Meßsignale a1 und a2 abhängen, werden die Zustände der Signale C und D überprüft. Aus der Zustandskombination zu verschiedenen Prüfzeitpunkten ist ersichtlich, ob ein störungsfreier Betrieb vorliegt. Störungsfreier Betrieb liegt dann vor, wenn folgende « Wahrheitstabelle » erfüllt ist :

| t | C | D |
|---|---|---|
| 1 | L | L |
| 2 | H | L |
| 3 | H | H |

D. h., zum Prüfzeitpunkt t1 muß das Binärsignal C den binären Zustand « 0 » (Low) = L haben, ebenso wie das Binärsignal D den binären Zustand « 0 » (Low) = L haben muß. Zum Prüfzeitpunkt t2 muß der binäre Zustand des Signales C « 1 » (High) = H sein, der binäre Zustand von D muß higegen « L » sein. Beim dritten Prüfzeitpunkt t3 muß der binäre Zustand beider Signale C und D « H » sein. Wenn diese Kombination vorliegt, verläuft die Positionierung fehlerfrei.

Der gestrichelte Verlauf der Kondensatorspannung U'c stellt einen fehlerhaften Betrieb der Positioniereinrichtung dar. In diesem Fall ist die tatsächliche Verschiebegeschwindigkeit zu niedrig. Der vom Sollwert für die Verschiebebewegung hergeleitete Ladestrom führt zu dem gestrichelt dargestellten Spannungsverlauf U'c am Kondensator C. Da die tatsächliche Geschwindigkeit jedoch zu niedrig ist, verzögert sich der von den Meßsignalen abgeleitete Entladezeitpunkt to. Das hat zur Folge, daß zum Zeitpunkt to eine höhere kondensatorspannung U'c an dem Kondensator C anliegt. Der Anstieg der Kondensatorspannung U'c ist bezogen auf die Meßsignalfrequenz (Anzahl der Meßsignalperioden pro Zeiteinheit) daher steiler als im ordnungsgemäßen Betrieb. Da jedoch die Triggerschwellen Vmax und Vmin bei den Triggerstufen 13, 14 unverändert bleiben, löst die Kondensatorspannung U'c früher die Erzeugung der Binärsignale C' und D' aus, so daß sich die gestrichelt dargestellen Binärsignale C' und D' gegenüber den Binärsignalen C und D verschieben. Da die Prüfzeitpunkte t1, t2 und t3 jedoch durch die Meßsignale exakt festgelegt sind, sind die binären Zustände der durch Triggerung erzeugten Binärsignale C', D' bei den Prüfzeitpunkten verändert, was auf folgender Tabelle erkennbar ist :

| t | C'D' |
|---|------|
| 1 | L L |
| 2 | H H |
| 3 | H H |

Zum Prüfzeitpunkt t1 sind beide Binärsignale C' und D' « L », zum Prüfzeitpunkt t2 sind beide Binärsignale C' und D' bereits « H » und zum Prüfzeitpunkt t3 sind wiederum beide Binärsignale C' und D' « H ». Da diese Zustandskombinationen der Binärsignale C' und D' gemäß der ersten « Wahrheitstabelle » unzulässig sind, wird von dem fehlersicheren Netzwerk F gemäß Figur 2 ein Alarm ausgelöst, bzw. die Bewegung der Maschinen-Bauteile 1 und 2 angehalten.

Der hier dargestellte Fehler « Betrieb mit zu niedriger Geschwindigkeit » stellt im allgemeinen keinen kritischen Betriebszustand dar, jedoch ist die Überwachung hinsichtlich zu hoher Geschwindigkeit äußerst wichtig.

Ebenso ließe sich eine Überwachungseinrichtung nach der Erfindung so ausgestalten, daß die Verschiebegeschwindigkeit der Maschinen-Bauteile 1 und 2 in zwei Bereichen mit unterschiedlichen Toleranzen überwacht wird. Zu diesem Zweck wird der Fachmann drei oder vier Trigger mit unterschiedlichen Triggerschwellen vorsehen, so daß sich aus einem ersten Bereich der ersten Triggerschwellen lediglich ein Warnbereich bestimmen läßt, indem eine optische und/oder akustische Warnung erfolgt. Wird der durch diese ersten Trigger festgelegte Warnbereich jedoch über- bzw. unterschritten, so erfolgt eine Unterbrechung der Verschiebebewegung selbsttätig.

Diese Anhaltebereich kann durch weitere Trigger mit anderen Triggerschwellen definiert sein.

Ebenso kann die selbsttätige Unterbrechung der Verschiebebewegung erfolgen, wenn eine bestimmte Verweilzeit im Warnbereich überschritten wird.

**Patentansprüche**

1. Einrichtung zum Positionieren von relativ zueinander verschiebbaren Maschinen-Bauteilen (1, 2), mit wenigstens einer Antriebseinrichtung (M) für das jeweils bewegliche Maschinen-Bauteil (2), mit einer elektronischen Steuereinrichtung (S) zur Steuerung der wenigstens einen Antriebseinrichtung (M) aufgrund vorgebbarer Sollwerte der Geschwindigkeit des jeweils verschiebbaren Maschinen-Bauteils (2), mit einem Signalgeber (L) zur Erzeugung von Positions-Istwerten (a1, a2) des verschiebbaren Maschinen-Bauteils (2), mit einer Überwachungsschaltung (G) zur Ermittlung von Geschwindigkeitsfehlern, wobei der Überwachungsschaltung (G) ein dem jeweiligen sollwert der Geschwindigkeit proportionales Signal zur Aufladung eines Kondensators (C) zugeführt wird, und die Überwachungsschaltung (G) einen Schaltungsteil (8, 9) aufweist, der den Kondensator (C) in Abhängigkeit von in der Steuereinrichtung (S) aus den Positionsistwerten ($a_1$, $a_2$) des Signalgebers (L) durch Teilung abgeleiteten Impulsen (B) periodisch entlädt, und daß die Überwachungsschaltung (G) Mittel zur Erzeugung einer Fehlermeldung aufweist, dadurch gekennzeichnet, daß die Überwachungsschaltung (G) für eine untere und eine obere Grenzgeschwindigkeit wenigstens je eine Triggerstufe (13, 14) aufweist, denen jeweils die Kondensatorspannung (Uc) zugeführt ist und die bei Überschreitung der Triggerschwellen (Vmin, Vmax) jeweils von einem ersten in einen zweiten zustand umgeschaltet werden, so daß als Ausgangssignale der Triggerstufe (13, 14) jeweils ein Binärsignal (C bzw. D) entsteht, von denen jedes einer logischen Schaltung (10, 11, 12) zugeführt wird, in der die Zustandskombinationen der beiden Binärsignale (C und D) zu bestimmten Prüfzeitpunkten (t1, t2, t3) auf Zulässigkeit überprüft werden, wobei die Prüfzeitpunkte (t1, t2, t3) in Abhängigkeit von der nomentanen Geschwindigkeit des beweglichen Maschinen-Bauteils (2) durch Impulse (V2) bestimmt werden, die aus den Positions-Istwerten (a1, a2) abgeleitet werden.

2. Einrichtung nach Anspruch 1, dadurch gekennzeichnet, daß die Steuereinrichtung (S) einen Digitalrechner (µC) enthält, in den Istwerte und Sollwerte von Positionen des verschiebbaren Maschinen-Bauteils (2) in digitaler Form eingebbar sind, und bei dem am Ausgang ein weiterer, resultierender, den Sollwert der Geschwindigkeit des verschiebbaren Maschinen-Bauteils (2) repräsentierender Digitalwert ansteht, der der vom Digitalrechner (µC) ermittelten Differenz der vorgenannten Istwerte und Sollwerte von Positionen des verschiebbaren Maschinen-Bauteils (2) entspricht, und daß der Digitalwert der Überwachungsschaltung (G) und einer Baueinheit (4) zur Erzeugung einer analogen Spannung für die Antriebseinrichtung (M) des verschiebbaren Maschinenbauteils (2) zugeführt wird.

**Claims**

1. Arrangement for positioning machine components (1, 2) movable relative to one another, with at least one drive device (M) for the particular movable machine component (2), with an electronic control device (S) for controlling the at least one drive device (M) on the basis of presettable desired values for the speed of the particular movable machine component (2), with a signal transmitter (L) for generating actual position values (a1, a2) for the movable machine component (2), and with a monitoring circuit (G) for determining speed errors, a signal proportional to the particular desired speed value being fed to the monitoring circuit (G) in order to charge a capacitor (C), the monitoring circuit (G) having a circuit part (8, 9) which periodically discharges the capacitor (C) as a function of pulses (B) derived in the control device (S) from the actual position values (a1, a2) of the signal transmitter (L) by division, and the monitoring circuit (G) having means of generating an error signal, characterized in that the monitoring circuit (G) has respectively for a lower and an upper limiting speed at least one trigger stage (13, 14), to each of which the capacitor voltage (Uc) is fed and which, when the trigger thresholds (Vmin, Vmix) are exceeded, are each switched from a first to a second state, so that there appear as output signals from the respective trigger stages (13, 14) binary signals (C, D), each of which is fed to a logic circuit (10, 11, 12), in which the state combinations of the two binary signals (C, D) are checked for admissibility at specific test moments (t1, t2, t3), the test moments (t1, t2, t3) being determined, as a function of the instantaneous speed of the movable machine component (2), by means of pulses (V2) which are derived from the actual position values (a1, a2).

2. Arrangement according to Claim 1, characterized in that the control device (S) contains a digital computer (μC), into which actual values and desired values for positions of the movable machine component (2) can be entered in digital form, and at the output of which appears a further resultant digital value which represents the desired value for the speed of the movable machine component (2) and which corresponds to the difference determined by the digital computer (μC) between the abovementioned actual values and desired values for positions of the movable machine component (2), and in that the digital value is fed to the monitoring circuit (G) and to a module (4) for generating an analog voltage for the drive device (M) of the movable machine component (2).

**Revendications**

1. Dispositif de positionnement de pièces de machine (1, 2), déplaçables en translation relative l'une par rapport à l'autre, doté d'au moins un dispositif d'entraînement (M) pour la pièce de machine mobile (2), d'un dispositif de commande électronique (S) du dispositif d'entraînement au moins unique (M) sur la base de valeurs de consigne prescriptibles à l'avance de la vitesse de ladite pièce mobile (2), d'un émetteur de signaux (L) pour engendrer des valeurs réelles de position (a1, a2) de la pièce mobile (2), d'un dispositif de surveillance (G) pour la détermination d'erreurs de vitesse, un signal proportionnel à la valeur de consigne chaque fois fixée de la vitesse étant amené au dispositif de surveillance (G) pour charger un condensateur (C), ce dispositif de surveillance (G) comportant une partie de circuit (8, 9) qui décharge périodiquement le condensateur (C) en fonction d'impulsions (B) dérivées, par division, des valeurs réelles de position (a1, a2) de l'émetteur de signaux dans le dispositif de commande (S) et le dispositif de surveillance (G) comportant des moyens d'émission d'une annonce d'erreur, dispositif de positionnement caractérisé par le fait que le dispositif de surveillance (G) comporte, pour chacune de deux vitesses limites, l'une inférieure, l'autre supérieure, au moins un étage déclencheur (13, 14) auquel est amenée la tension (Uc) du condensateur et qui, au franchissement de son seuil de déclenchement (Vmin, Vmax) commute chaque fois d'un premier état à un second en sorte qu'il apparaît alors comme signal de sortie à chacun de ces étages déclencheurs (13, 14) un signal binaire (C ou D), chacun de ces signaux (C, D) étant amené à un circuit logique (10, 11, 12) dans lequel les combinaisons d'états des deux signaux binaires (C et D) sont examinées quant à leur acceptabilité à des instants de contrôle (t1, t2, t3) donnés, lesquels sont déterminés, en fonction de la vitesse instantanée de la pièce de machine mobile (2), par des impulsions (V2) qui sont dérivées des valeurs réelles de position (a1, a2).

2. Dispositif selon la revendication 1 caractérisé par le fait que le dispositif de commande (S) renferme un calculateur numérique (μC) dans lequel des valeurs réelles et des valeurs de consigne de position de la pièce de machine déplaçable en translation (2) sont introductibles et à la sortie duquel se trouve une autre valeur numérique résultante représentant la valeur de consigne de la vitesse de ladite pièce de machine déplaçable en translation (2) et correspondant à la différence entre les valeurs réelles et de consigne de position précitées déterminée par le calculateur numérique (μC) et que ladite valeur numérique résultante est amenée au dispositif de surveillance (G) et à une unité (4) destinée à engendrer une tension analogique pour le dispositif d'entraînement (M) de la pièce de machine déplaçable en translation (2).

**FIG.1**

**FIG.2**

FIG. 3

# FIG. 4